# FASCICULE DE BREVET EUROPEEN

(11) **EP 0 429 568 B1**
(45) Date de publication et mention de la délivrance du brevet: **22.03.1995**
(21) Numéro de dépôt: 90904850.6
(22) Date de dépôt: 27.02.1990
(51) Int. Cl.: G01S 7/02, G01S 13/78, G01S 13/75

(54) **SYSTEME D'IDENTIFICATION ENTRE UN POSTE D'INTERROGATION ET UN REPONDEUR, PAR VOIE HERTZIENNE**
Identifizierungssystem mit Herzwellen, enthaltend eine fragende Station und eine Antwortstation
IDENTIFICATION SYSTEM USING HERTZIAN WAVES, CONSISTING OF AN INTERROGATION STATION AND A RESPONDER UNIT

(30) Priorité: 27.02.1989 FR 8902502
(43) Date de publication de la demande: 05.06.1991
(73) Titulaire: SOCIETE ANONYME HYPER X, F-31400 Toulouse (FR)
(72) Inventeur: CABON, Philippe, F-31450 Pompertuzat (FR); HABIGAND, Jean-François, F-31130 Balma (FR)
(74) Mandataire: Wagret, Jean-Michel
(86) Numéro de dépôt international: FR9000139
(87) Numéro de publication internationale: WO9010200

(56) Documents cités:
- EP-A- 0 186 483
- EP-A- 0 245 606
- DE-A- 3 104 508
- GB-A- 2 048 600
- US-A- 3 716 856
- US-A- 3 945 006

## Description

La présente invention concerne un système d'identification entre au moins un poste d'interrogation ou interrogateur et au moins un, et éventuellement une pluralité de postes de réponse ou répondeurs.

Plus spécialement, l'invention est applicable à l'identification d'un répondeur depuis un poste d'interrogation, l'un des deux éléments, soit le répondeur, soit l'interrogateur, étant mobile par rapport à l'autre et l'identification étant obtenue sans contact, le transfert de l'information s'effectuant par voie hertzienne.

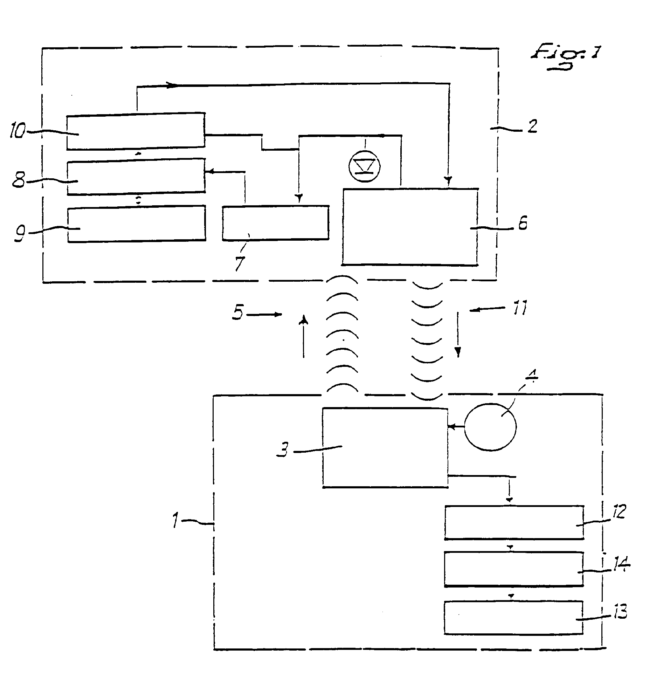

On connait de nombreux systèmes de ce type permettant l'identification d'un répondeur, et la figure 1 illustre les diverses fonctions mises en oeuvre dans le cadre des systèmes d'interrogation suivie d'une réponse d'identification, actuellement connus.

Selon la figure 1, on voit qu'un poste d'interrogation (fixe ou mobile) émet un signal codé 5 sur une longueur d'onde radio, notamment et de préférence, sur une longueur d'ondes submétrique.

Plus spécialement, on utilise des ondes radio-hyperfréquence, le terme "onde hyperfréquence" étant utilisé dans le cours de la présente description comme désignant des ondes de fréquence radio, supérieures à 100 MHz.

A cet effet, le poste d'interrogation ou interrogateur 1 comporte un générateur d'ondes ou oscillateur 4 alimentant l'antenne 3 pour l'émission de l'onde d'interrogation 5. Ce signal est perçu par l'antenne 6 d'un badge 2 qui peut transmettre le signal au détecteur 7, lequel alerte l'électronique de commande 8 déclenchant la mise en mémoire du signal perçu dans la mémoire flottante 9 et l'alimentation du modulateur 10.

Le signal reçu par le badge 2, après modulation, est transmis à l'antenne 3 qui réémet en écho une onde de réponse 11 de même nature que l'onde d'interrogation, mais après modulation.

Cette onde, reçue à son tour par l'antenne 3, du poste fixe, peut être traitée par le mélangeur 12 en vue d'extraire un signal basse fréquence correspondant à la modulation de l'onde porteuse, ce signal basse fréquence après amplification en 14, peut être traité dans un micro-processeur 13, afin notamment d'analyser le signal et de déterminer le contenu de l'information.

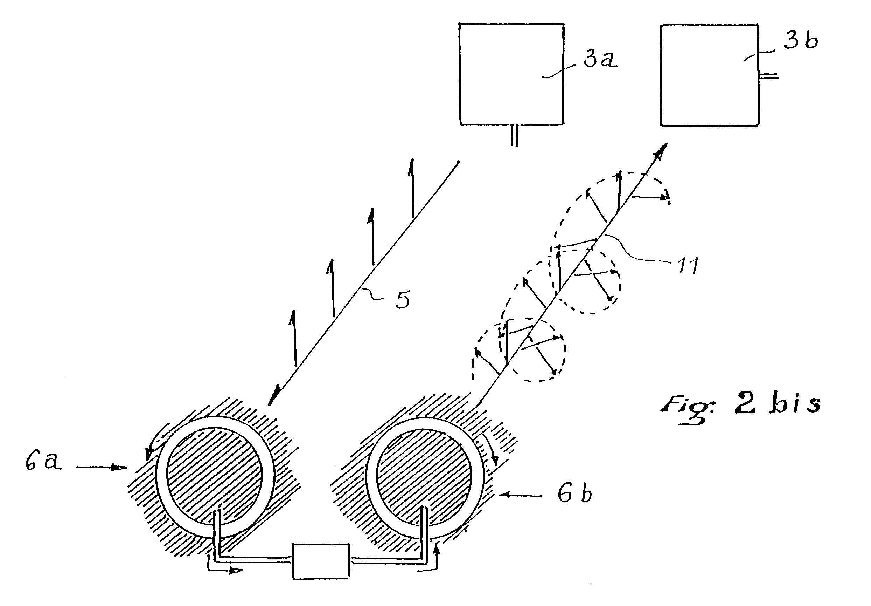

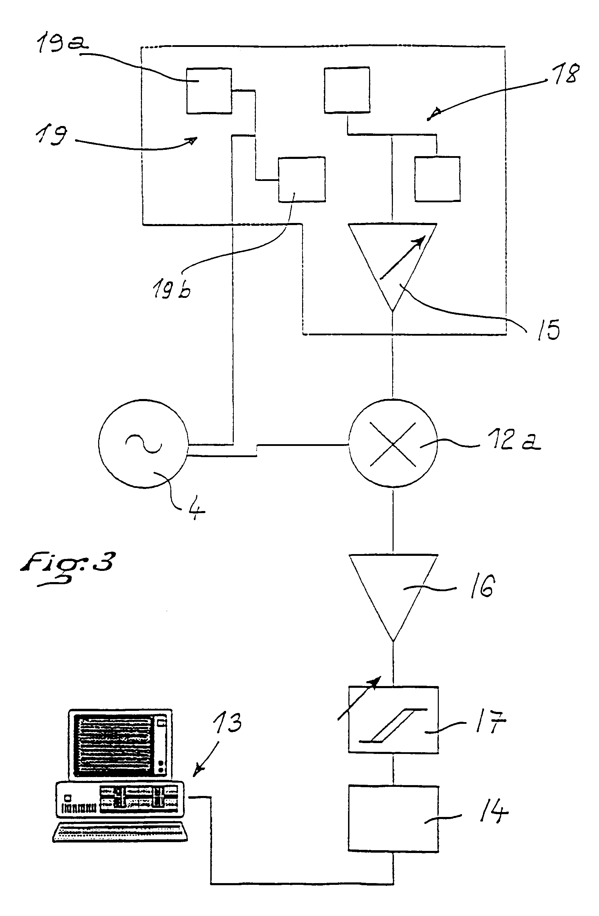

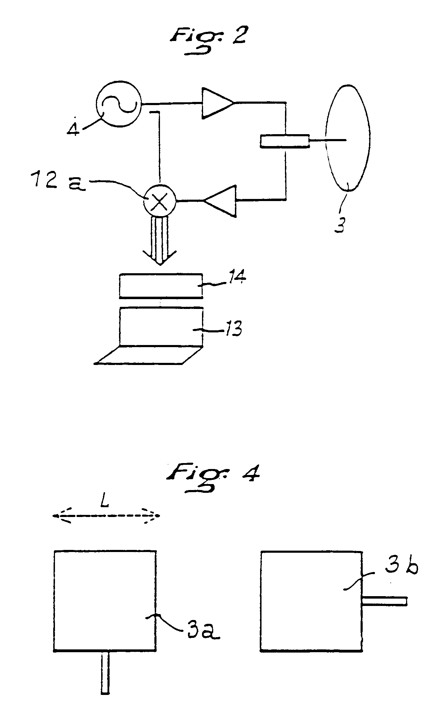

Ce même dispositif, limité à l'interrogateur, est illustré par le schéma de la figure 2.

On connait par le brevet EP 245 606 un transpondeur radio-fréquence (RF) susceptible d'être utilisé dans un appareil de commande automatique/à distance, du type comportant une pluralité de transpondeurs RF conçus de manière à coopérer avec au moins un parmi une pluralité d'instruments de mesure de paramètres, disposé à distance par rapport à un interrogateur/récepteur qui transmet un signal d'activation RF aux transpondeurs et qui reçoit et traite les signaux du transpondeur RF transmis depuis les transpondeurs en réponse au signal d'activation, le transpondeur comprenant un circuit d'activation pour déclencher la transmission des signaux de transpondeur de façon aléatoire sur réception du signal d'activation.

On connait également par le brevet US 3 716 856, une balise à transpondeur pour un radar Doppler à impulsions cohérentes, comprenant une antenne constituée de deux réseaux de sources rayonnantes aptes à rayonner des ondes électromagnétiques possédant une polarisation perpendiculaire l'une à l'autre, quatre coupleurs directionnels montés deux par deux à la sortie de chaque réseau, deux circuits de détection, amplification et à seuil associé chacun à un coupleur directionnel de chaque réseau, une jonction hybride reliée aux deux autres coupleurs directionnels, deux circuits de détection, amplification et seuil montés aux sorties de la jonction hybride, un circuit logique recevant des signaux de sortie desdits circuits de détection, amplication et seuil, deux circuits de déphasage de phases à micro-ondes, respectivement montés aux sorties du réseau, et un circuit de commande pour commander les circuits de décalage de phases de manière à provoquer une variation linéaire du décalage de phases produit par les circuits de décalage de phase. Selon ce dispositif connu, lorsque la polarisation est circulaire dans le sens horaire ou anti-horaire, les deux circuits de décalage introduisent un décalage de phase de π radians. Les directions de propagation reçues et émises étant opposées, le signal reçu par l'antenne de radar doit présenter, par rapport à ladite antenne de radar, une polarisation circulaire inverse.

L'invention apporte des améliorations et des possibilités d'utilisation considérablement développées aux systèmes d'identification par interrogation-réponse du type spécifié.

Un premier objet de l'invention est de permettre d'élargir considérablement les possibilités de réception du signal d'interrogation depuis le répondeur en définissant de façon élargie et directionnelle la zone d'écoute desservie par le poste d'interrogation.

Selon les développements ci-après décrits, il est possible de diriger le lobe d'émission, définissant par conséquent la zone d'écoute, dans une direction et dans une zone de l'espace préférentielle dans laquelle la présence d'un répondeur est normalement attendue.

Selon un autre objet, l'invention vise à permettre d'élargir le spectre des positionnements du répondeur en état de réceptivité par rapport à l'interrogateur.

Selon ce développement on élimine les contraintes des dispositifs connus qui ne permettent d'assurer une bonne réceptivité du signal d'interrogation par les répondeurs, que dans des positions privilégiées et relativement limitées dudit répondeur.

Encore un autre objet de l'invention vise à élargir les possibilités d'utilisation pratiques du système d'identification, notamment en présence d'une pluralité de répondeurs susceptibles de se présenter concomitamment au poste d'interrogation.

Il sera ainsi possible dans le cadre des développements ci-après décrits de réaliser un système d'interrogation apte à détecter de façon discrimatoire et isolément chacun des répondeurs, bien que ces derniers se présentent sensiblement en même temps face à l'interrogateur en évitant que des signaux de réponse n'interfèrent entre eux.

Enfin un dernier objet de l'invention permet une écoute fiable du signal de réponse par un poste d'interrogation, sans risque d'interférence avec les postes d'interrogation voisins.

A cette fin, selon l'invention, le procédé d'identification entre un interrogateur formé d'un émetteur-récepteur d'ondes radio de préférence hyperfréquence , et un répondeur recevant ladite onde et la réémettant en écho après modulation codée spécifique vers l'interrogateur, cette onde d'écho étant reçue et démodulée par l'interrogateur, suite à quoi celui-ci en extrait le code d'identification, est caractérisé par les étapes consistant à : émettre à l'aide de l'interrogateur au moyen d'une antenne adaptée pour transmettre une polarisation rectiligne ayant un plan de polarisation prédéterminé, un signal d'interrogation constitué par une onde radio émise en polarisation rectiligne ; recevoir au répondeur cette onde à l'aide d'une antenne adaptée pour recevoir une polarisation circulaire selon un premier sens de rotation ; réémettre par le répondeur à destination de l'interrogateur un signal de réponse constitué par une onde radio de même nature que l'onde d'interrogation, mais dont la polarisation est circulaire et possède un second sens de rotation opposé au premier ; cette onde étant porteuse d'une modulation introduite au répondeur ; recevoir à l'interrogateur ledit signal de réponse au moyen d'une antenne adaptée pour recevoir une polarisation rectiligne dont le plan de polarisation est perpendiculaire au plan de polarisation de l'antenne d'émission de l'interrogateur.

De préférence, le procédé inclut une étape de différenciation par le répondeur entre le signal d'interrogation et le signal de réponse, en fonction des sens de rotation opposés l'un à l'autre de la polarisation de l'onde d'interrogation reçue et l'onde de réémission transmise par le répondeur.

Avantageusement, l'étape d'émission par l'interrogateur du signal d'interrogation consiste à définir un lobe de rayonnement directionnel privilégiant certaines zones de l'espace proches de l'interrogateur et correspondant à une zone d'écoute programmée.

Plus particulièrement, le procédé inclut des phases de commutation d'alimentation telles que chaque émission d'interrogation successive de l'interrogateur définit un lobe de rayonnement orienté dans l'espace selon une direction différente par rapport à l'émission précédente.

Plus spécialement encore, le procédé comprend une étape de commande temporelle du répondeur propre à interrompre dans le temps le signal de réémission modulé par rapport au signal d'interrogation,et une étape consistant à retarder aléatoirement la réémission modulée de l'onde selon un temps de retard variable et différent pour chaque réponse d'un répondeur , de sorte que l'interrogateur peut effectuer une discrimination entre les signaux de réponse respectifs d'au moins deux répondeurs voisins l'un par rapport à l'autre.

Avantageusement, chaque signal de réponse réémis par le répondeur est une salve d'impulsions , à plusieurs reprises successives, les salves étant espacées séquentiellement en fonction du retard aléatoire précité et donc par des périodes successivement différentes.

L'étape précitée de réception et de réémission peut être effectuée depuis une face ou l'autre de répondeur .

Préférentiellement, le procédé comprend une étape de réglage de la fréquence d'interrogation à l'intérieur d'une bande déterminée correspondant à la bande de réception de plusieurs répondeurs , de façon à différencier les fréquences d'émission de plusieurs interrogateurs en position voisine, et à séparer au niveau de chaque interrogateur les signaux de réponse des répondeurs par rapport aux signaux d'interrogation des interrogateurs voisins.

L'invention concerne également un dispositif d'identification du type comprenant au moins un interrogateur et au moins un répondeur qui comportent respectivement des moyens émetteur-récepteur d'ondes radio de préférence hyperfréquence, le répondeur possédant un modulateur apte à effectuer une modulation codée spécifique de l'onde émise par l'interrogateur et relié à des moyens émetteur-récepteur afin de retransmettre l'onde codée en écho vers l'interrogateur, tandis que ce dernier possède un démodulateur apte à extraire le code spécifique de l'onde en écho caractérisé en ce que les moyens émetteur-récepteur de l'interrogateur comportent une antenne prévue avec une topographie apte à engendrer une onde à polarisation rectiligne selon un plan prédéterminé et les moyens émetteur-récepteur du répondeur comportent une antenne de réception à polarisation circulaire selon un premier sens de rotation, ainsi qu'une antenne de réémission apte à transmettre vers l'interrogateur un signal de réponse à polarisation circulaire, mais dont le sens de rotation est opposé au premier, l'antenne de réémission du répondeur étant reliée au modulateur tandis que l'interrogateur est pourvu d'une antenne de réception apte à recevoir une polarisation rectiligne dont le plan est perpendiculaire à celui de la polarisation de l'onde émise par l'antenne d'émission .

Avantageusement, deux antennes du répondeur respectivement pour la réception de l'onde d'interrogation et pour sa réémission en écho après modulation, sont voisines et agencées symétriquement, et les moyens émetteur-récepteur du répondeur comprennent au moins une antenne disposée sur une face ou l'autre du répondeur.

L'interrogateur comporte une pluralité d'antennes d'interrogation reliées entre elles par un réseau d'alimentation et alimentées selon des caractéristiques déterminées d'amplitude et de phase, propres à permettre une émission du signal d'interrogation définissant un lobe de rayonnement directionnel.

Selon un mode préféré au moins un répondeur est constitué d'un badge sensiblement plat, au moins une des antennes à polarisation circulaire est contenue dans un plan parallèle à une grande face du badge et les moyens émetteur-récepteur du répondeur comportent un circuit hyperfréquence de réception, de modulation et de réémission, un circuit logique qui est pourvu d'une horloge, d'une mémoire et de moyens électroniques de commande et de contrôle du circuit hyperfréquence, tandis que le répondeur possède une source d'alimentation préférentielle.

Plus particulièrement, sur une face du badge les antennes sont jumelées et reposent sur un plan diélectrique chacune étant raccordée à deux micro-rubans d'alimentation reliés à un transistor modulateur qui est alimenté par l'intermédiaire d'une résistance à l'aide d'un circuit intégré de commande piloté par quartz .

D'autres caractéristiques et avantages de l'invention ressortiront de la description qui suit et qui est donnée en rapport avec quelques formes particulières de réalisation présentées à titre d'exemple non limitatif et en se référant aux dessins annexés.

La figure 1 représente un diagramme général de principe d'un système d'interrogation et réponse utilisé dans le cadre de l'invention dont la figure 2 donne une représentation schématique.

La figure 2bis représente un schéma de principe montrant les polarisations des ondes d'interrogation et de réponse.

La figure 3 donne un diagramme de réalisation d'un poste d'interrogation ou interrogateur réalisé conformément à l'invention.

La figure 4 donne deux exemples d'antennes respectivement d'émission (ou interrogation) et de réception (réponse) au niveau de l'interrogateur.

La figure 5 représente une variante montrant un réseau de deux antennes d'émission disposées sur l'interrogateur.

La figure 6 montre une forme générale du lobe de rayonnement susceptible d'être obtenu par le réseau de deux antennes d'émission de la figure 5.

La figure 7 montre un réseau de quatre antennes d'émission susceptibles d'être utilisées sur un interrogateur.

La figure 8 montre une variante de réalisation d'antennes d'émission disposées sur le poste d'interrogation, les deux antennes jumelées étant susceptibles d'être alimentées de façon différentielle par un commutateur en définissant deux lobes de rayonnement différents en fonction des conditions d'alimentation.

La figure 9 montre un schéma synoptique de modulation d'impulsions du répondeur.

Les figures 10 et 11 montrent deux antennes jumelées susceptibles d'être utilisées dans le cadre de la réemission du signal de réponse par le répondeur.

La figure 12 montre une variante de réalisation d'un répondeur dans lequel les antennes de la figure 11 sont disposées sur chacune des faces du badge de réponse en permettant une utilisation de ce dernier en réception et émission par ses deux faces.

La figure 13 montre une vue d'une variante de réalisation d'un répondeur équipé de deux antennes à fente circulaire jumelées.

La figure 14 montre le répondeur de la figure 13 par sa face opposée tandis que

La figure 15 montre une vue en coupe du badge des figures 13 et 14 selon les lignes XV-XV respectivement des figures 13 et 14.

La figure 16 illustre la réalisation d'un micro-ruban alimentant une antenne à fente à polarisation circulaire du bagde des figures 13, 14 et 15.

La figure 17 montre un diagramme illustrant le décalage des fréquences entre deux interrogateurs voisins pour éviter les interférences.

La figure 18 et la figure 19 illustrent les possibilités de positionnement angulaire du répondeur respectivement selon l'art antérieur (figure 18) et dans le cadre de la présente invention (figure 19).

La figure 20 montre un diagramme des temps illustrant les réceptions de signaux de réponse depuis plusieurs badges.

Le dispositif de l'invention qui va être ci-après décrit se situe dans le cadre des systèmes d'identification par question et réponses tels que définis précédemment et en rapport avec les schémas généraux des figures 1 et 2.

Selon une première caractéristique de l'invention l'onde d'interrogation 5 est émise depuis une antenne 3a (figure 2 bis et figure 4) prévue avec une topographie apte à engendrer l'émission d'une onde en polarisation verticale. Cette onde est par exemple émise sur une fréquence de 2,45 GHZ et elle est constituée d'une onde entretenue non modulée. Cette onde est par exemple émise sur une fréquence de 2,45 GHz et elle est constituée d'une onde entretenue non modulée.

Cette onde d'interrogation sera reçue au niveau du répondeur par l'antenne 6a à polarisation circulaire selon un premier sens de rotation de la polarisation.

La figure 2bis montre des antennes à fente à polarisation circulaire telles qu'elles sont représentées plus en détail notamment sur la figure 13.

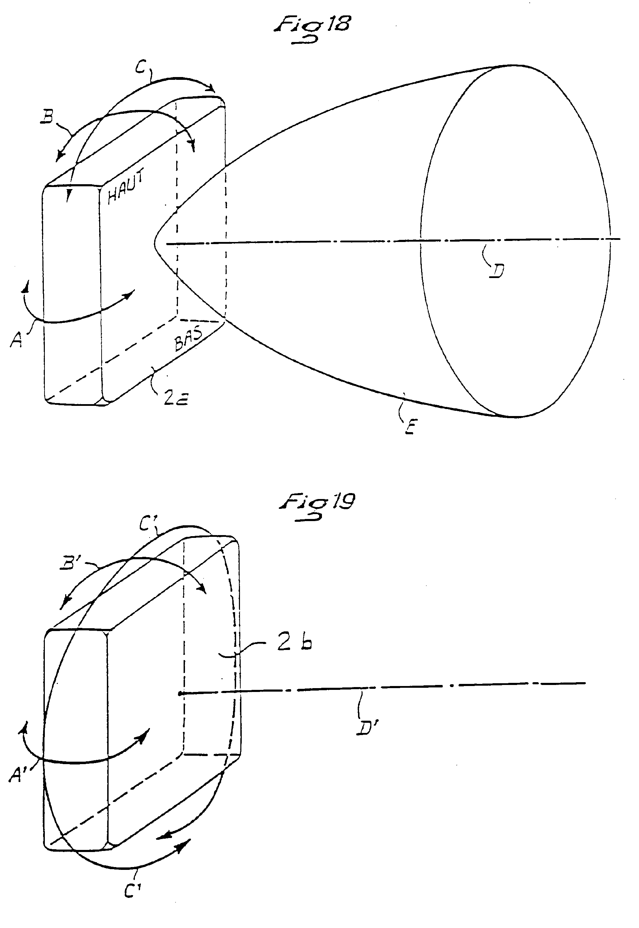

L'intérêt d'une réception en polarisation circulaire est de permettre une réception du signal, c'est-à-dire de l'onde d'interrogation 5, par le répondeur dans une gamme de positionnements angulaires beaucoup plus large et qui est illustrée aux figures 18 et 19.

La figure 18 montre un badge répondeur 2a selon les techniques actuellement connues et qui est positionné orthogonalement par rapport à la droite idéale D reliant le badge répondeur à l'interrogateur; dans cette position le badge est en position de réceptivité maximale; et on voit qu'autour de cette position idéale sont autorisés des débattements selon trois axes de battements correspondant aux segments A, B et C; dans les techniques actuellement connues l'angle d'ouverture autour de la position idéale ne dépasse sensiblement 22° c'est-à-dire que chacun des segments A, B, C, illustrant les posssibilités extrêmes de positionnement du badge ne dépasse pas 45°.

La figure 19 représente le badge selon l'invention qui comporte par conséquent une antenne de réception à polarisation circulaire.

On voit que si les segments A′ et B′ sont équivalents aux segments A et B du badge précédent, le badge selon l'invention peut être positionné dans son plan selon une valeur angulaire quelconque, le segment C′, définissant le lieu géométrique des positions actives du badge 2b dans son plan, atteignant 360°.

On comprend en effet que qelle que soit la position du badge répondeur 2b l'antenne de polarisation circulaire 6a (figure 2bis) sera toujours en mesure de capter une onde à polarisation plane (quel que soit le positionnement du répondeur dans ce plan).

Ainsi selon cette première caractéristique de l'invention le répondeur est apte, comme on le voit sur la figure 19, à être positionné dans son plan de façon indifférenciée tout en restant en position de réceptivité du signal d'interrogation.

Parallèlement on voit toujours selon la figure 2bis que l'antenne 6a de réception est associée à l'antenne 6b symétrique, du type à fente et à polarisation circulaire inversée par rapport au sens de rotation de la polarisation de l'antenne de réception 6a.

Et cette antenne de réémission 6b renvoie le signal de réponse (après modulation comme exposé plus en détail ultérieurement), l'onde de réponse étant ici à polarisation circulaire, et de sens inversé à la polarisation de l'antenne réceptrice 6a.

On évite ainsi par l'inversion des sens de rotation de la polarisation une interférence entre l'antenne réceptrice 6a et l'antenne émettrice 6b; du fait de l'inversion du sens de la polarisation, l'antenne 6a n'est pas en mesure de recevoir le signal de réponse 11.

L'interrogateur reçoit lui-même le signal de réponse 11 (à polarisation circulaire) par l'antenne 3b du type à polarisation plane, le plan de polarisation de l'antenne 3b étant décalé de 90° par rapport au plan de polarisation de l'antenne émettrice 3a.

Du fait de ce décalage on évite également au niveau de l'interrogateur des interférences entre les signaux d'émission émis par l'antenne 3a qui ne peuvent être réceptionnés par l'antenne 3b du fait du décalage des plans de polarisation.

Cependant l'antenne 3b à polarisation plane est en mesure de réceptionner dans l'onde à polarisation circulaire 11 la composante horizontale. Dans ces condition on obtient au niveau tant de l'interrogateur qu'au niveau du répondeur un découplage entre les deux antennes respectivement de polarisations opposées et non compatibles de sorte que l'antenne de réception, au niveau de chacun des éléments, ne peut réceptionner parasitairement le signal émis par l'antenne voisine.

Par ailleurs on retrouve au niveau de l'onde de réponse 11 les avantages de la polarisation circulaire qui ont été signalés au niveau de la réception par l'antenne 6a; du fait de la polarisation circulaire l'onde de réponse 11 sera reçue par l'antenne 3b quel que soit le positionnement dans son plan du répondeur et donc de l'antenne de réémission 6b; en effet quelle que soit cette position la polarisation circulaire engendrera automatiquement une composante venant en concordance avec le plan de polarisation de l'antenne de réception 3b.

On voit donc que du fait de cette première caractéristique de l'invention on élargit considérablement les possibilités d'utilisation des répondeurs, puisque le répondeur étant positionné dans un plan sensiblement orthogonal par rapport à la droite le reliant à l'interrogateur (avec des tolérances de 45° en site et en azimut) le répondeur pourra dans cette position être tourné indifféremment dans son plan de 360° sans modifier la qualité de la réception et de la réémission.

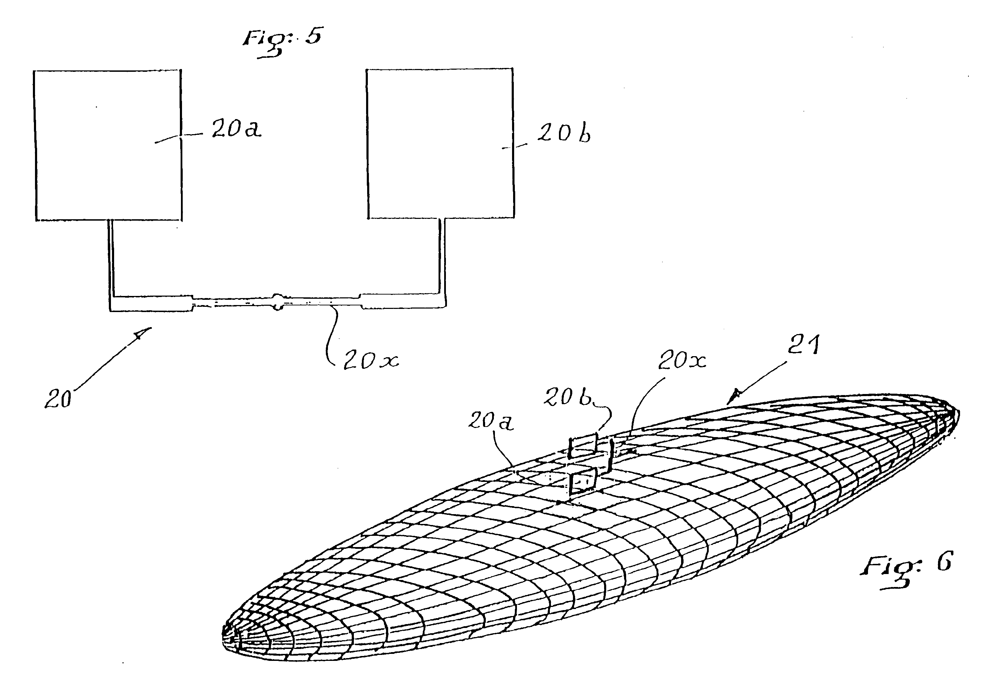

Les figures 3 à 8 illustrent des variantes de réalisation de l'invention exposant notamment des configurations d'antennes disposées en réseau de façon à orienter le lobe de rayonnement dans une zone préférencielle de l'espace.

La figure 2bis montre une antenne unique d'émission.

Il peut cependant être avantageux de remplacer cette antenne unique par un réseau d'antennes en vue de privilégier certaines zones de l'espace correspondant à des zones d'écoutes préférencielles.

La figure 3 donne à titre d'exemple, une première forme d'un réseau à deux antennes, tant pour l'émission que pour la réception.

La figure 3 représente de façon générale le poste d'interrogation comportant les mêmes moyens que représentés aux figures 1 et 2 (et affectés des mêmes références).

Le poste d'interrogation de la figure 3 est représenté en outre avec un amplificateur de gain variable 15, interposé entre le mélangeur 12a de démodulation et l'antenne de réception 18, décrite ci-après; en aval du mélangeur 12a de démodulation est également représenté un aplificateur 16 et un convertisseur analogique digital 17.

Selon la figure 3 on a représenté une configuration d'antennes spécifiques tant au niveau de l'antenne d'émission 19 qu'au niveau de l'antenne de réception 18.

Les deux antennes 19a et 19b étant conjuguées et disposées dans cet exemple pour engendrer un lobe de rayonnement en oblique; qui correspond à un lobe de réception voisin et identique au niveau de l'antenne 18.

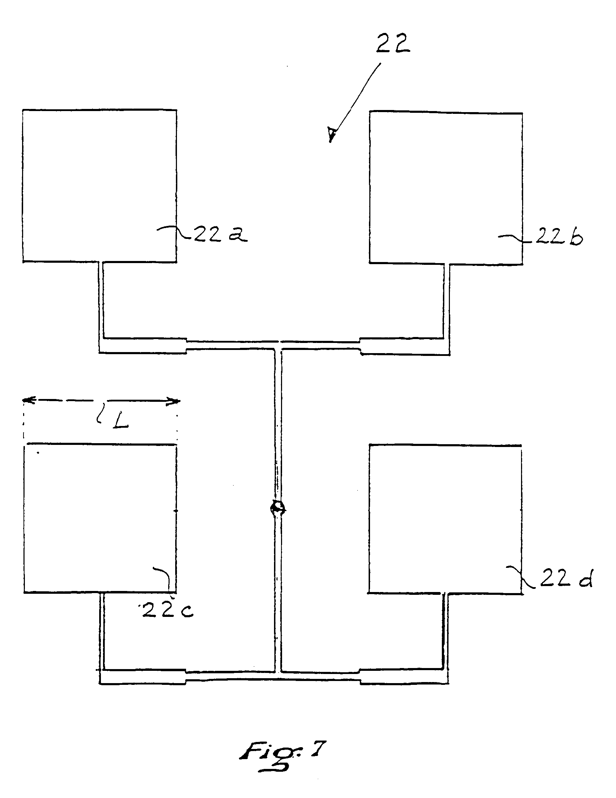

La figure 5 montre une variante d'un réseau 20 de deux antennes 20a, 20b, jumelées et disposées côte à côte.

Ces antennes jumelées vont permettre l'émission d'un lobe de rayonnement largement étalé de part et d'autre du plan de l'antenne de façon à couvrir préférenciellement les zones situées de chaque côté.

Cette disposition élargit dans un plan horizontal le lobe de rayonnement tout en le conservant sensiblement resserré dans un plan vertical.

On aboutit à un lobe de rayonnement 21 représenté à la figure 6 étalé latéralement de part et d'autre de l'axe 20x reliant les deux antennes élémentaires 20a et 20b tout en évitant une déperdition en hauteur.

Cette configuration peut être avantageuse lorsque l'on veut surveiller ou écouter une zone se situant autour d'un niveau moyen en hauteur mais susceptible d'être largement répartie à droite et à gauche du niveau de l'antenne.

La figure 7 montre un nouvel exemple illustrant un réseau 22 de quatre antennes 22a, 22b, 22c et 22d branchées sur une alimentation commune.

On comprend que l'interrogation peut se faire en polarisation verticale comme en polarisation horizontale (l'important étant que les antennes d'émission, d'une part, et de réception, d'autre part, adoptent des plans de polarisation décalés de 90°).

Dans l'exemple de la figure 3, les antennes d'émission 19a et 19b sont en polarisation horizontale tandis que les antennes des figures 5, 7 et 8 fonctionnent en polarisation verticale.

Dans tous ces exemples le côté de l'antenne L est déterminé par la formule L = lg/2 - 2dlo, dans laquelle dlo est un coefficient correspondant à la prise en compte de l'effet de bord et lg est la longueur d'onde guidée du signal de travail.

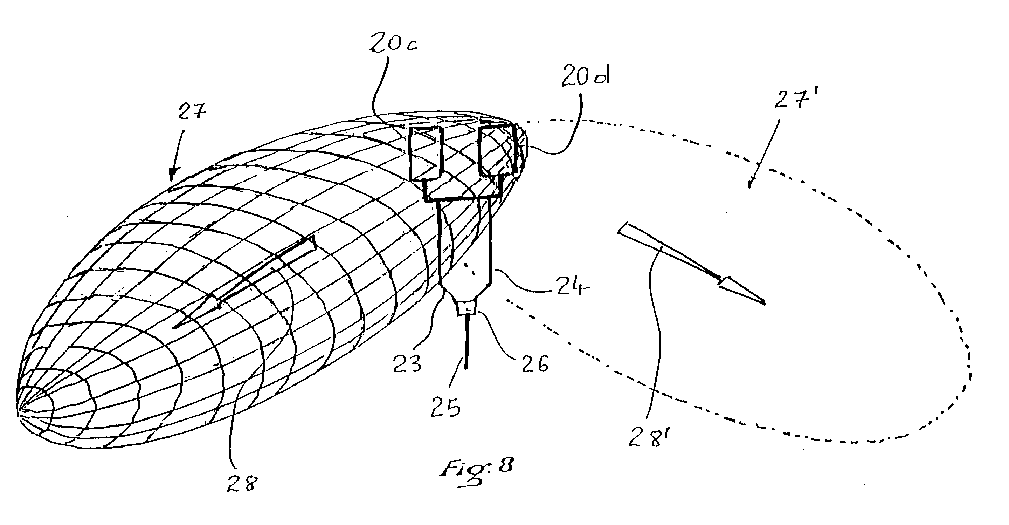

La figure 8 illustre un nouveau développement de l'invention dans lequel les antennes jumelées respectivement 20a et 20c sont du type représenté à la figure 5 mais leur réseau comporte des micro-rubans de connexion raccordés en amont à l'alimentation 25 par l'intermédiaire d'un commutateur 26, et branchés sur l'alimentation commune aux deux antennes 20c et 20d à des niveaux différents.

De sorte que l'action sur le commutateur 26 permet d'alimenter la paire d'antennes 20c et 20d soit par le canal 23 soit par le canal 24.

L'alimentation préférencielle ainsi orientée vers une antenne au détriment de l'autre engendre l'émission d'un lobe de rayonnement 27 (correspondant à une alimentation préférencielle de l'antenne 20c), en permettant ainsi une écoute d'une zone de l'espace selon un lobe d'émission 27 dont l'axe 28 forme un angle avec le plan des deux antennes 20c et 20d.

La commutation de l'alimentation sur le canal 24 permet immédiatement ensuite d'orienter le lobe d'emission 27′ selon l'axe 28′ symétrique de l'axe 28.

On peut ainsi à partir d'un même réseau d'antennes 20c et 20d être à l'écoute alternativement de la partie droite puis de la partie gauche de la zone de surveillance.

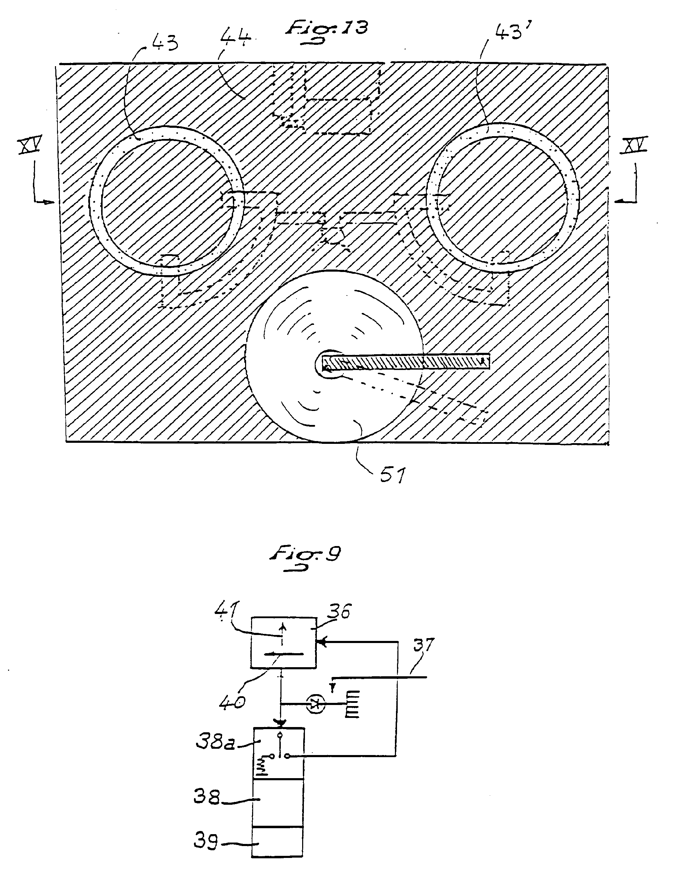

Les figures 9, 10, 11, 12, 13, 14, 15 et 16 illustrent la réalisation de l'invention au niveau du répondeur.

Le répondeur dans le cadre d'un développement important de l'invention comporte une caractéristique originale visant à permettre la discrimination des signaux de réponse susceptibles d'être émis par deux, ou plus, répondeurs présents simultanément dans une zone d'écoute desservie par le signal d'interrogation en provoquant par conséquent en principe l'émission au niveau des deux répondeurs de signaux de réponse simultanés, donc inintelligibles pour l'interrogateur.

Dans le cadre de la mise en oeuvre de l'invention le répondeur comporte un générateur de retard aléatoire qui est prévu pour déterminer, entre plusieurs réémissions de signaux de réponse successifs un décalage dans le temps, de telle sorte que chaque signal de réponse soit dans le temps rigoureusement indépendant du signal d'interrogation et également indépendant du signal de réémission précédent.

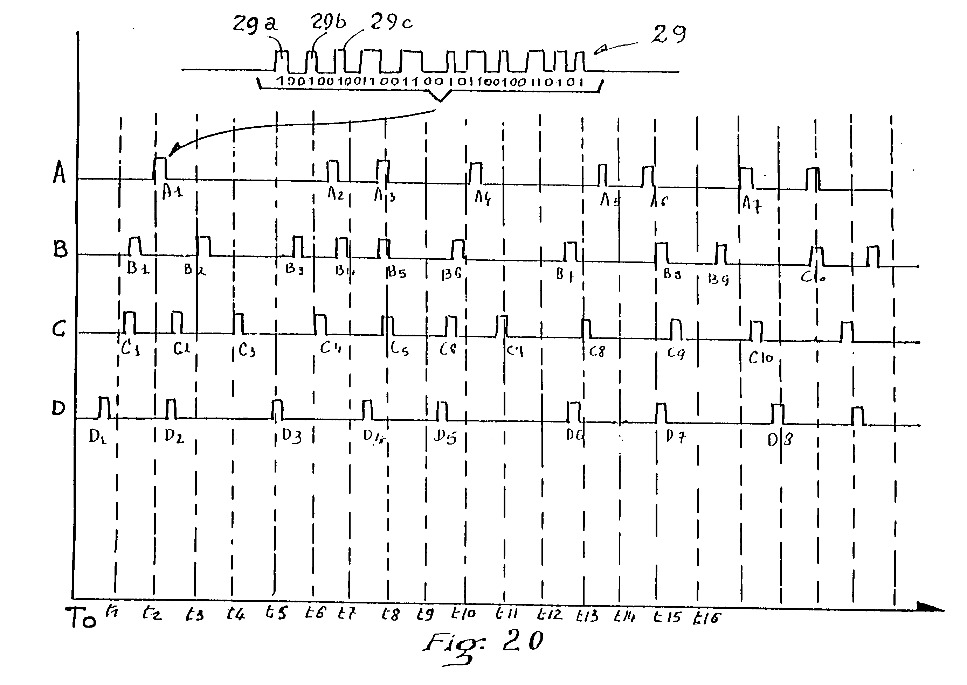

Cette caractéristique importante est illustrée notamment sur la figure 20.

Cette figure montre un diagramme des temps repérant le positionnement dans le temps, à partir du moment T 0 correspondant à un temps de référence quelconque des réémissions en écho ou signaux de réponse provenant de quatre répondeurs respectivement A, B, C, et D présentant sensiblement en même temps à l'intérieur de la zone d'écoute desservie par le lobe de rayonnement. Sur la figure 20 et pour la clarté des représentations les proportions entre les temps d'émissions et les intervalles de silence ne sont pas respectés.

Ainsi que nous l'avons vu, théoriquement les répondeurs, recevant sensiblement en même temps l'onde d'interrogation, renverraient en écho sensiblement en même temps un signal de réponse, les signaux de réponse se superposant sur une même fréquence étant par conséquent inaudibles pour l'interrogateur.

On voit selon la figure 20 que chaque signal de réponse A1, B1, C1 etc.. est constitué par une salve 29 d'impulsions élémentaires 29a, 29b, correspondant à une codification spécifique aux répondeurs.

Dans le présent cas la codification par modulation du signal de réponse se fait par modulation d'impulsions.

Ainsi qu'on l'exposera plus en détail ultérieurement, l'onde d'interrogation est une onde entretenue et continue, non modulée, reçue par conséquent en permanence par l'interrogateur pendant toute la période durant laquelle il se trouve à l'intérieur du lobe de rayonnement.

Cette onde est réémise par segments modulés à intervalles irreguliers et qui correspondent aux émissions de réponse A1, A2, A3 etc...pour le badge A, B1, B2, B3 pour le badge B etc....

Selon une caractéristique importante de l'invention chaque badge répondeur comporte dans son circuit logique un générateur de retard aléatoire tel que les réémissions de signaux de réponse se situent dans le temps de façon erratique et sans liens temporels ni avec la réception de l'onde de d'interrogation ni avec l'émission du signal de réponse précédent.

On voit donc notamment à la lumière de la figure 20 que de ce fait les signaux de réponse étant répartis aléatoirement dans le temps on obtient automatiquement, du fait de l'application de la loi des grands nombres, des décalages permettant de discriminer les signaux de réponse émis par un répondeur par rapport à un autre.

Sur les diagrammes de réponse de la figure 20 on voit notamment que dans un premier temps le répondeur D émet isolément un signal D1 qui peut donc être reçu par l'interrogateur et permettant ainsi l'identification du répondeur D.

Immédiatement ensuite les répondeurs B et C émettent sensiblement en chevauchement dans le temps de sorte que les deux signaux D1 et C1 interférant l'un avec l'autre ne seront pas reconnus par l'interrogateur; on peut admettre qu'il en est de même également du signal A1 qui se trouve sensiblement en position d'interférence avec le signal D2 et le signal C2, de sorte qu'aucun de ces trois signaux ne pourra être séparé de l'ensemble.

Ensuite intervient le signal B2 qui est nettement détaché des autres signaux et qui permet donc l'identification du répondeur B.

Il en est de même du répondeur C qui peut être identifié au niveau de son signal de réponse C3 parfaitement décalé par rapport aux autres.

Le signal D3 est également isolé et permettrait une nouvelle identification du répondeur D (qui a déjà été reconnu au niveau de la réponse D1).

On voit dans cet exemple que le répondeur A n'a toujours pas été identifié; les réponses A2 et A3 venant en interférence avec d'autres signaux ne permettront pas son identification séparée.

Cet au niveau du signal de réponse A4, puis éventuellement A5 ou même A6 que le badge A pourra être identifié à son tour.

On comprend que dans ces conditions bien que quatre répondeurs soient simultanément en position de réponse dans le lobe de rayonnement l'interrogateur sera cependant en mesure, grâce aux décalages aléatoires des signaux de réponse de récevoir les informations nécessaires propres à l'identification de tous les répondeurs.

La valeur du retard aléatoire est déterminée au niveau du générateur de retard et ce retard est en réalité un retard pseudo-aléatoire limité entre une valeur minimale et une valeur maximale.

La valeur minimale est fonction de la durée d'émission du signal de réponse et elle dépend du nombre maximum de badges susceptibles d'être identifiées simultanément; cette valeur minimale étant ainsi un multiple (selon le nombre de badges susceptibles d'être réceptionnés simultanément) de la durée moyenne de la salve d'impulsions correspondant à un signal.

La valeur maximale est déterminée pour une portée donnée de l'interrogateur par le temps maximum de séjour du répondeur à l'intérieur du lobe de rayonnement correspondant à la zone d'écoute.

La réalisation du répondeur est illustrée par les figures 9, 10, 11, 12, 13, 14, 15 et 16.

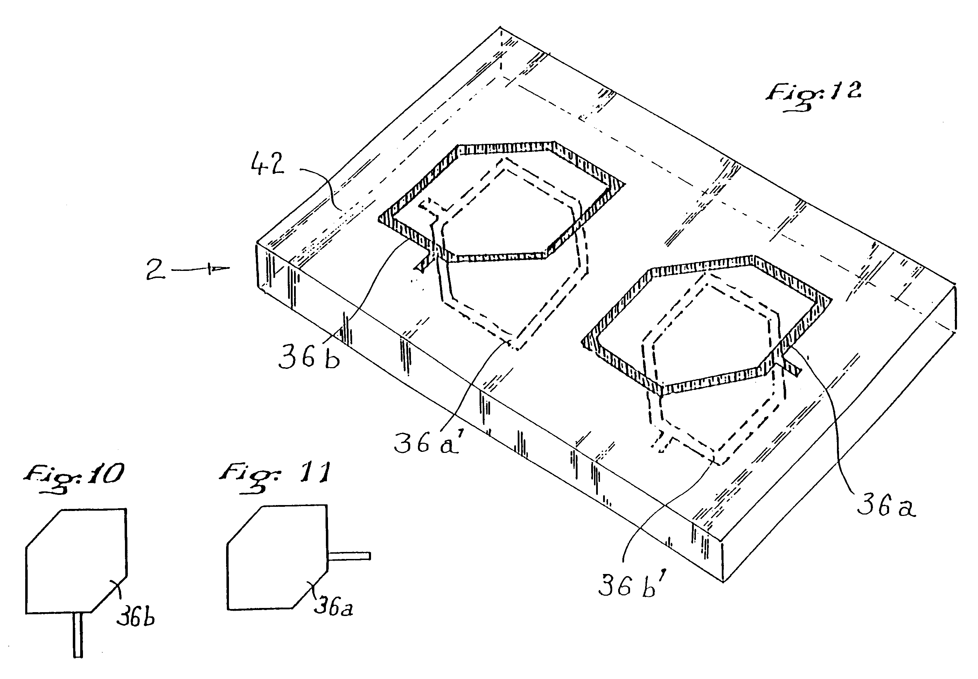

La figure 10 donne un premier exemple de réalisation dans lequel le signal réceptionné par l'antenne 36 après avoir mis en éveil le détecter 37 est réceptionné par le commutateur 38a en vue de sa réémission après un temps de retard aléatoire comme décrit précédemment, la réémission étant effectuée après modulation d'impulsions sous le contrôle de l'électronique de commande 38 reliée à la mémoire 39.

On voit que dans ce cas le signal modulé est retransmis selon une direction de polarisation 40 orthogonale à la direction de polarisation 41 correspondant à la réception.

La polarisation circulaire, avantageusement mise en oeuvre, pourra être obtenue au niveau du répondeur par des configurations d'antennes telles qu'illustrées aux figures 10, 11 et 12.

Les antennes 36a et 36b sont prévues avec des topographies permettant des réceptions et émissions en polarisation circulaire selon deux sens de rotation de la polarisation inversée sur une antenne par rapport à l'autre; ceci comme décrit précédemment.

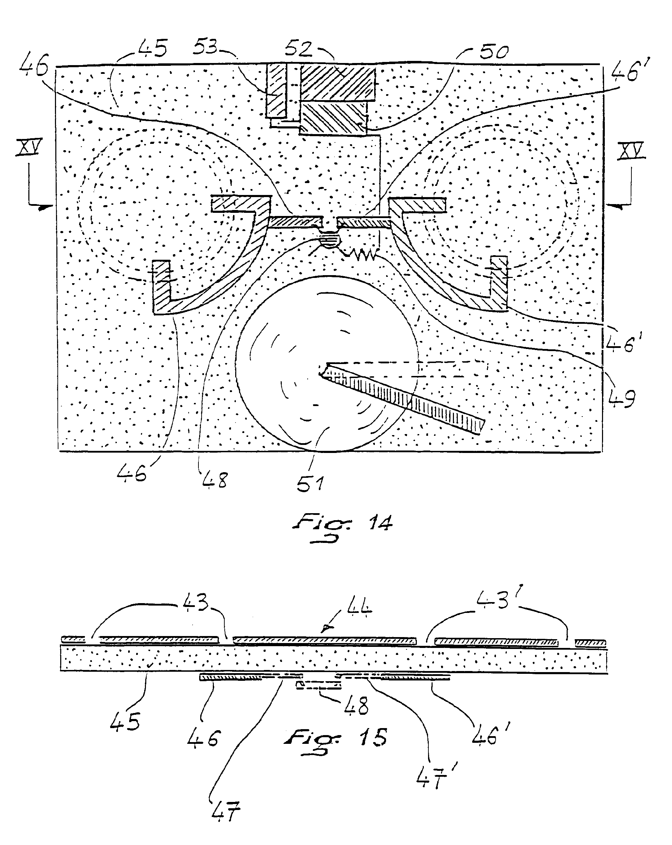

La figure 12 montre un exemple de montage des deux antennes des figures 10 et 11 sur un badge répondeur.

Une antenne étant ainsi affectée à l'émission tandis que l'autre antenne est affectée à la réception.

Et selon une caractéristique originale de l'invention le badge répondeur de la figure 12 est prévu avec une possibilité de réceptivité sur ses deux faces et comporte à cet effet une antenne 36a et une antenne 36b sur une première face 42 tandis que sur la face opposée apparaissent les deux antennes 36a′ et 36b′ disposées selon une configuration identique aux antennes 36a et 36b sur la face 42 et séparées par un plan de masse commun.

On réalise ainsi selon l'exemple de la figure 12 un répondeur susceptible de recevoir l'onde d'interrogation, et de la renvoyer en écho avec le signal de réponse, quel que soit son positionnement par rapport à l'interrogateur, les deux faces du répondeur respectivement recto et verso étant également opérationnelles.

Les figures 13, 14, 15 et 16 illustrent de façon plus spécifique un exemple de réalisation d'un répondeur possédant comme exposé précédemment, deux antennes jumelées à polarisation circulaire et de sens de rotation inversée l'une par rapport à l'autre, permettant de mettre en oeuvre de façon simple et efficace les moyens de l'invention.

Dans cet exemple de réalisation on a utilisé des antennes à polarisation circulaire du type à fente.

Ces antennes ont la propriété connue de permettre une réception par une face ou par l'autre, et elles sont constituées d'une solution de continuité circulaire ou fente 43, 43′ disposée sur la plaque métallique 44 elle-même reposant sur un diélectrique 45.

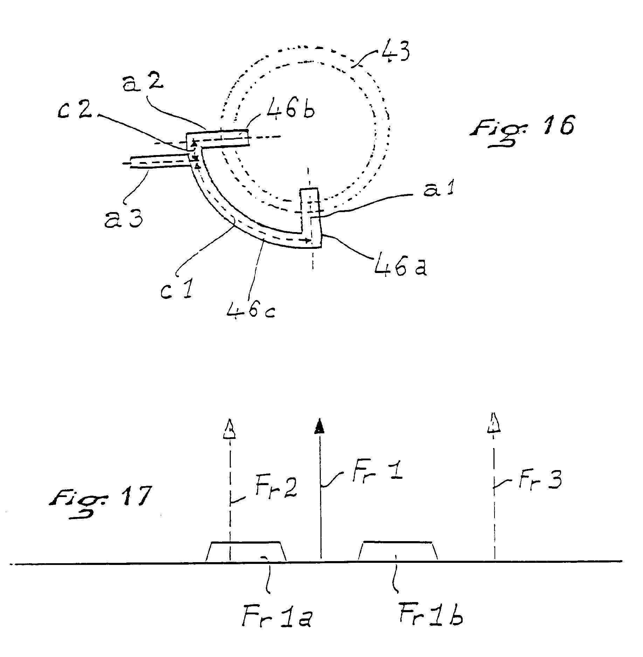

Les antennes constituées des fentes 43, 43′ sont alimentées par un micro-ruban 46, 46′ de forme spécifique et représenté plus en détail à la figure 16.

On voit que ce micro-ruban comporte deux branches 46a et 46b disposées radialement par rapport à la fente circulaire 43 et ces deux branches radiales étant réunies par le segment 46c.

Ce micro-ruban 46 est lui-même alimenté depuis le raccordement 47.

De façon connue ce type d'alimentation par micro-ruban selon les deux bras radiaux 46b et 46a détermine l'émission en polarisation circulaire et le diamètre de la fente détermine la fréquence de l'émission.
En considérant l'axe médian a1 du bras radial 46a, l'axe médian a2 du bras radial 46b, l'axe médian du raccordement a3, et enfin la ligne courbe médiane C1 du segment 46c, on détermine que la différence entre les distances C1 et C2 sont définies valant le quart de la longueur d'onde d'émission.

Les deux micro-rubans 46 et 46′ étant positionnés symétriquement déterminent par conséquent au niveau des antennes à fente 43, 43′ des ondes de polarisation circulaire de sens de rotation inversés d'une antenne par rapport à l'autre comme précédemment décrit.

Les connexions d''alimentation 47 et 47′ sont à leur tour pontées par le transistor 48 alimenté avec interposition de la résistance 49 par le circuit intégré 50.

Ce dernier est de préférence du type à alimentation permanente en basse tension depuis la pile 51.

Le circuit intégré 50 peut être relié par une connectique 52 avec l'extérieur pour programmation du code mémorisé et il est associé à une horloge à quartz 53.

Le circuit intégré comporte un générateur de retard aléatoire permettant d'alimenter par intervalles irréguliers comme exposé précédemment, le transistor de modulations 48.

On comprend dans ces conditions que le transistor 48 est alimenté en permanence mais par intervalles irréguliers. Tant que le répondeur des figures 13, 14 et 15 se situe en dehors d'une zone de rayonnement, le transistor "module à vide".

Dès que le répondeur pénètre dans un lobe de rayonnement, l'antenne à fente 43 réceptionne le signal d'interrogation sur une fréquence déterminée (sur laquelle l'antenne est précisément calée).

L'antenne de réception 43 est alors mise ou non en communication avec l'antenne de réémission 43′, suivant que le micro-ruban de réémission 46′ est ou non en communication avec le micro-ruban de réception 46 par l'alimentation du transistor de modulation 48.

Dans les intervalles séparant les émissions successives d'un signal de réponse (sous forme d'une salve d'impulsions) l'antenne de réémission 43 se trouve isolée de l'antenne de réception de sorte que le signal d'interrogation réceptionné par l'antenne 43 ne peut être véhiculé jusque vers l'antenne de réémission 43′et cette antenne reste silencieuse.

Lors de période d'activation du transistor 48 sous la commande du circuit intégré 50, la communication entre les deux connexions 47 et 47′, donc entre les deux micro-rubans 46 et 46′, s'effectue et le signal reçu par l'antenne 43 peut être véhiculé vers l'antenne 43′ en recevant au passage la modulation d'impulsion déterminée par le transistor 48.

Et comme précédemment décrit la réémission est effectuée sur onde à polarisation circulaire avec sens de rotation inversée par rapport à sens de rotation de la polarisation de l'antenne de réception 43 qui ne peut donc être troublée ou perturbée par une réception parasite de l'émission de son antenne voisine.

Un dernier développement de l'invention est illustré à la figure 17.

Selon ce développement chaque interrogateur peut voir sa fréquence réglée et ajustée à l'intérieur de 12 bande de réception des antennes des interrogateurs en service.

On voit selon la figure 17 que le signal Fr1 correspond au calage d'une fréquence d'interrogation d'un premier interrogateur donné.

Ce signal d'interrogation sera accompagné au niveau de la réponse des signaux de modulation illustrés par les bandes latérales Fr1a et Fr1b.

On voit qu'en raison éventuellement des tolérances de construction un interrogateur voisin calé en principe sur une fréquence Fr1 identique à la première pourrait se trouver accidentellement déporté sur une fréquence voisine, par exemple la fréquence Fr2.

Cette fréquence Fr2 se situe précisément à l'intérieur de la bande latérale Fr1a.

De sorte que l'interrogateur recevant son signal de réponse Fr1 et ses bandes latérales Fr1a et Fr1b recevra en même temps le signal parasite constitué par l'émission d'interrogation Fr2 de l'interrogateur voisin.

Pour éviter ce phénomène on prévoit de caler les fréquences des signaux d'interrogation à l'intérieur de la bande d'exploitation, les fréquences des interrogateurs susceptibles d'être mises en service à proximité l'une de l'autre étant décalées sur le spectre des fréquences d'une longueur supérieure à la largeur des bandes latérales Fr1a et Fr1b.

On évite ainsi ces risques d'interférence entre la réception d'un interrogateur recevant à la fois son propre écho depuis un répondeur et en même temps le signal d'interrogation de l'interrogateur voisin.

A partir d'une certaine distance d'espacement telle que Fr1 et Fr3 il est facile par un jeu de filtres d'éliminer les signaux parasites.

## Revendications

1. Procédé d'identification entre un interrogateur (1) formé d'un émetteur-récepteur d'ondes radio de préférence hyperfréquence (5), et un répondeur (2) recevant ladite onde et la réémettant en écho après modulation codée spécifique vers l'interrogateur, cette onde (11) d'écho étant reçue et démodulée par l'interrogateur, suite à quoi celui-ci en extrait le code d'identification, caractérisé par les étapes consistant à : émettre à l'aide de l'interrogateur (1) au moyen d'une antenne adaptée pour transmettre une polarisation rectiligne ayant un plan de polarisation prédéterminé, un signal d'interrogation constitué par une onde radio émise en polarisation rectiligne ; recevoir au répondeur cette onde à l'aide d'une antenne adaptée pour recevoir une polarisation circulaire selon un premier sens de rotation ; réémettre par le répondeur à destination de l'interrogateur un signal de réponse constitué par une onde radio de même nature que l'onde d'interrogation, mais dont la polarisation est circulaire et possède un second sens de rotation opposé au premier ; cette onde étant porteuse d'une modulation introduite au répondeur ; recevoir à l'interrogateur ledit signal de réponse au moyen d'une antenne adaptée pour recevoir une polarisation rectiligne dont le plan de polarisation est perpendiculaire au plan de polarisation de l'antenne d'émission de l'interrogateur.

2. Procédé d'identification selon la revendication 1, caractérisé par une étape de différenciation par le répondeur (2) entre le signal d'interrogation et le signal de réponse, en fonction des sens de rotation opposés l'un à l'autre de la polarisation de l'onde d'interrogation (6a) reçue et l'onde de réémission (6b) transmise par le répondeur.

3. Procédé d'identification selon l'une des revendications 1 ou 2, caractérisé en ce que l'étape d'émission par l'interrogateur (1) du signal d'interrogation consiste à définir un lobe de rayonnement (21) directionnel privilégiant certaines zones de l'espace proches de l'interrogateur et correspondant à une zone d'écoute programmée.

4. Procédé d'identification selon la revendication 3, caractérisé par des phases de commutation d'alimentation telles que chaque émission d'interrogation successive de l'interrogateur (1) définit un lobe de rayonnement (27, 27′) orienté dans l'espace selon une direction différente par rapport à l'émission précédente.

5. Procédé d'identification selon l'une des revendications 1 à 4, caractérisé par une étape de commande temporelle du répondeur (2) propre à interrompre dans le temps le signal de réémission modulé par rapport au signal d'interrogation et par une étape consistant à retarder aléatoirement la réémission modulée de l'onde selon un temps de retard variable et différent pour chaque réponse d'un répondeur (2), de sorte que l'interrogateur peut effectuer une discrimination entre les signaux de réponse respectifs d'au moins deux répondeurs (2) voisins l'un par rapport à l'autre.

6. Procédé d'identification selon la revendication 5, caractérisé en ce que chaque signal de réponse réémis par le répondeur (2) est une salve d'impulsions (29), à plusieurs reprises successives, les salves étant espacées séquentiellement en fonction du retard aléatoire précité et donc par des périodes successivement différentes.

7. Procédé d'identification selon l'une des revendications 1 à 6, caractérisé en ce que l'étape précitée de réception et de réémission peut être effectuée depuis une face ou l'autre de répondeur (2).

8. Procédé d'identification selon l'une des revendications 1 à 7, caractérisé par une étape de réglage de la fréquence d'interrogation à l'intérieur d'une bande déterminée correspondant à la bande de réception de plusieurs répondeurs (2), de façon à différencier les fréquences d'émission de plusieurs interrogateurs (1) en position voisine, et à séparer au niveau de chaque interrogateur les signaux de réponse des répondeurs (2) par rapport aux signaux d'interrogations des interrogateurs voisins (1).

9. Dispositif d'identification du type comprenant au moins un interrogateur (1) et au moins un répondeur (2) qui comportent respectivement des moyens émetteur-récepteur (3, 6) d'ondes radio (5, 11) de préférence hyperfréquence, le répondeur (2) possédant un modulateur (10) apte à effectuer une modulation codée spécifique de l'onde (5) émise par l'interrogateur (1) et relié à des moyens émetteur-récepteur (6) afin de retransmettre l'onde codée (11) en écho vers l'interrogateur, tandis que ce dernier possède un démodulateur (12, 13, 14) apte à extraire le code spécifique de l'onde en écho (11), caractérisé en ce que les moyens émetteur-récepteur de l'interrogateur (1) comportent une antenne (3a) prévue avec une topographie apte à engendrer une onde à polarisation rectiligne selon un plan prédéterminé et les moyens émetteur-récepteur du répondeur (2) comportent une antenne de réception (6a) à polarisation circulaire selon un premier sens de rotation, ainsi qu'une antenne (6b) de réémission apte à transmettre vers l'interrogateur (1) un signal de réponse à polarisation circulaire, mais dont le sens de rotation est opposé au premier, l'antenne (6b) de réémission du répondeur (2) étant reliée au modulateur tandis que l'interrogateur (1) est pourvu d'une antenne de réception apte à recevoir une polarisation rectiligne dont le plan est perpendiculaire à celui de la polarisation de l'onde émise par antenne d'émission (3a).

10. Dispositif d'identification selon la revendication 9, caractérisé en ce que deux antennes du répondeur (2) respectivement pour la réception de l'onde d'interrogation (6a) et pour sa réémission (6b) en écho après modulation, sont voisines et agencées symétriquement.

11. Dispositif d'identification selon la revendication 9 ou 10, caractérisé en ce que les moyens émetteur-récepteur du répondeur (2) comprennent au moins une antenne disposée sur une face ou l'autre du répondeur.

12. Dispositif d'identification selon l'une des revendications 9, 10 ou 11, caractérisé en ce que l'interrogateur (1) comporte une pluralité d'antennes d'interrogation (19a, 19b, 20a, 20b) reliées entre elles par un réseau d'alimentation et alimentées selon des caractéristiques déterminées d'amplitude et de phase, propres à permettre une émission du signal d'interrogation définissant un lobe de rayonnement (21) directionnel.

13. Dispositif d'identification selon la revendication 12, caractérisé en ce que le réseau d'alimentation connectant lesdites antennes (20c, 20d) comporte des moyens (26, 23, 24) de commutation

14. Dispositif d'identification selon l'une des revendications 9 à 13, caractérisé en ce qu'il comprend au moins deux répondeurs (2) qui comportent chacun des moyens de commande temporelle aptes à déconnecter séquentiellement les moyens émetteur-récepteur (6) transmettant le signal de réponse modulé, et reliés à un générateur de retard aléatoire qui détermine la durée de déconnection momentanée des moyens émetteur-récepteur (6) provoquée par lesdits moyens de commande.

15. Dispositif d'identification selon l'une des revendications 9 à 14, caractérisé en ce qu'au moins un répondeur est constitué d'un badge (2b) sensiblement plat, qu'au moins une des antennes à polarisation circulaire (6a, 6b) est contenue dans un plan parallèle à une grande face du badge et que les moyens émetteur-récepteur du répondeur comportent un circuit hyperfréquence de réception, de modulation et de réémission, un circuit logique qui est pourvu d'une horloge, d'une mémoire et de moyens électroniques de commande et de contrôle du circuit hyperfréquence, tandis que le répondeur (2) possède une source d'alimentation préférentielle.

16. Dispositif d'identification selon la revendication 15, caractérisé en ce que le badge (2) comporte sur chaque face deux antennes (36a, 36b, 36a′, 36b,), une de réception et une de réémission, les deux groupes d'antennes étant séparés par un plan de masse.

17. Dispositif d'identification selon la revendication 15 ou 16, caractérisé en ce que le badge (2) comporte deux antennes (43, 43′) du type à fente circulaire et positionnées côté à côte, symétriquement sur un plan (45).

18. Dispositif d'identification selon la revendication 17, caractérisé en ce que sur une face du badge les antennes (43, 43′) sont jumelées et reposent sur un plan diélectrique (45), chacune étant raccordée à deux micro-rubans d'alimentation (46, 46′) reliés à un transistor (48) modulateur qui est alimenté par l'intermédiaire d'une résistance (49) à l'aide d'un circuit intégré de commande (50) piloté par quartz (53).

19. Dispositif d'identification selon la revendication 18, caractérisé en ce que le circuit intégré (50) constitue une alimentation permanente à basse tension et à longue durée de vie, telle que celles utilisées dans l'horlogerie électronique.

## Patentansprüche

1. Identifizierungsverfahren, enthaltend eine fragende Station (1), bestehend aus einem Sender/Empfänger für hochfrequente, vorzugsweise ultrahochfrequente Wellen (5), und eine Antwortstation (2), die die Welle empfängt und sie nach spezieller codierter Modulation als Echo zur fragenden Station zurücksendet, wobei die fragende Station die Echowelle (11) empfängt und demoduliert und anschließend den Identifizierungscode daraus gewinnt, dadurch gekennzeichnet, daß mit Hilfe der fragenden Station (1) mittels einer für die Übermittlung einer Linearpolarisation mit einer vorbestimmten Polarisationsebene geeigneten Antenne ein Abfragesignal, bestehend aus einer in Linearpolarisation ausgesandten hochfrequenten Welle, ausgesandt wird, daß diese Welle in der Antwortstation mit Hilfe einer für den Empfang einer Kreispolarisation in einer ersten Drehrichtung ausgelegten Antenne empfangen wird, daß von der Antwortstation an die fragende Station ein Antwortsignal gesandt wird, das aus einer hochfrequenten Welle gleicher Art wie die Abfragewelle besteht, jedoch eine Kreispolarisation mit einer der ersten Drehrichtung entgegengesetzten Drehrichtung aufweist, wobei die Welle Trägerin einer in der Antwortstation bewirkten Modulation ist, und daß die fragende Station das Antwortsignal mittels einer Antenne empfängt, die in der Lage ist, eine Linearpolarisation zu empfangen, deren Polarisationsebene senkrecht zur Polarisationsebene der Sendeantenne der fragenden Station liegt.

2. Identifizierungsverfahren nach Anspruch 1, dadurch gekennzeichnet, daß die Antwortstation (2) zwischen dem Abfragesignal und dem Antwortsignal nach den entgegengesetzten Polarisationsrichtungen der empfangenen Abfragewelle (6a) und der von der Antwortstation wieder ausgesandten Welle (6b) unterscheidet.

3. Identifizierungsverfahren nach einem der Ansprüche 1 oder 2, dadurch gekennzeichnet, daß der Schritt der Aussendung des Abfragesignals durch die fragende Station (1) darin besteht, daß eine gerichtete Strahlungskeule (21) definiert wird, die bestimmte Raumbereiche begünstigt, die sich nahe der fragenden Station befinden und einem programmierten Abhörbereich entsprechen.

4. Identifizierungsverfahren nach Anspruch 3, dadurch gekennzeichnet, daß die Spannungszufuhr derart geschaltet ist, daß die einzelnen von der fragenden Station (1) ausgesandten Abfragesignale jeweils eine Strahlungskeule (27, 27′) definieren, die jeweils im Raum gegenüber dem zuvor ausgesandten Signal unterschiedlich gerichtet ist.

5. Identifizierungsverfahren nach einem der Ansprüche 1 bis 4, dadurch gekennzeichnet, daß die Antwortstation (2) derart zeitlich gesteuert ist, daß das dem Abfragesignal gegenüber modulierte, wieder ausgesandte Signal zeitlich unterbrochen wird, und daß die modulierte Wiederaussendung der Welle bei jeder Antwort einer Antwortstation (2) willkürlich um eine veränderliche und unterschiedliche Zeitspanne verzögert wird derart, daß die fragende Station zwischen den jeweiligen Antwortsignalen mindestens zweier zueinander benachbarter Antwortstationen (2) unterscheiden kann.

6. Identifizierungsverfahren nach Anspruch 5, dadurch gekennzeichnet, daß jedes von der Antwortstation (2) wieder ausgesandte Antwortsignal aus einer mehrfach aufeinanderfolgenden Impulssalve (29) besteht, wobei die einzelnen Salven sequentiell entsprechend der vorerwähnten zufälligen Verzögerung und infolgedessen um unterschiedliche aufeinanderfolgende Zeiträume voneinander beabstandet sind.

7. Identifizierungsverfahren nach einem der Ansprüche 1 bis 6, dadurch gekennzeichnet, daß der besagte Schritt des Empfangs und der Wiederaussendung von einer oder der anderen Seite der Antwortstation (2) bewirkt werden kann.

8. Identifizierungsverfahren nach einem der Ansprüche 1 bis 7, dadurch gekennzeichnet, daß die Abfragefrequenz innerhalb eines dem Empfangsband mehrerer Antwortstationen (2) entsprechenden bestimmten Bandes geregelt ist, so daß die Aussendungsfrequenzen mehrerer benachbarter fragender Stationen (1) unterschieden und die Antwortsignale der Antwortstationen (2) im Bereich der einzelnen fragenden Stationen von den Abfragesignalen der benachbarten Abfragestationen (1) getrennt werden können.

9. Identifizierungssystem mit mindestens einer fragenden Station (1) und mindestens einer Antwortstation (2), die jeweils Sender/Empfänger-Einrichtungen (3, 6) für hochfrequente, vorzugsweise ultrahochfrequente Wellen (5, 11) umfassen, wobei die Antwortstation (2) einen Modulator (10) besitzt, mittels dessen eine spezielle codierte Modulation der von der fragenden Station (1) ausgesandten Welle (5) bewirkt werden kann und die mit Sender/Empfänger-Einrichtungen (6) verbunden ist, um die codierte Welle (11) als Echo zur fragenden Station zurückzusenden, während letztere einen Demodulator (12, 13, 14) besitzt, mittels dessen der spezielle Code aus der Echowelle (11) gewonnen werden kann, dadurch gekennzeichnet, daß die Sender/Empfänger-Einrichtungen der fragenden Station (1) eine Antenne (3a) umfassen, die derart ausgelegt ist, daß sie eine nach einer vorbestimmten Ebene linear polarisierte Welle erzeugen kann, und die Sender/Empfänger-Mittel der Antwortstation (2) eine Empfangsantenne (6a) mit Kreispolarisation in einer ersten Drehrichtung sowie eine Wiederaussendeantenne (6b) umfassen, mittels derer ein kreispolarisiertes Antwortsignal, jedoch mit zur ersten Drehrichtung entgegengesetzter Drehrichtung, an die fragende Station (1) gesandt werden kann, wobei die Wiederaussendeantenne (6b) der Antwortstation (2) mit dem Modulator verbunden ist, während die fragende Station (1) mit einer Empfangsantenne verbunden ist, mittels derer eine Linearpolarisation empfangen werden kann, deren Ebene senkrecht zur Polarisationsebene der von der Sendeantenne (3a) ausgesandten Welle liegt.

10. Identifizierungssystem nach Anspruch 9, dadurch gekennzeichnet, daß die beiden Antennen der Antwortstation (2) für den Empfang der Abfragewelle (6a) bzw. deren Wiederaussendung (6b) als Echo nach erfolgter Modulation benachbart zueinander und symmetrisch angeordnet sind.

11. Identifizierungssystem nach Anspruch 9 der 10, dadurch gekennzeichnet, daß die Sender/Empfänger-Einrichtungen der Antwortstation (2) mindestens eine an der einen oder der anderen Fläche der Antwortstation angeordnete Antenne umfassen.

12. Identifizierungssystem nach einem der Ansprüche 9, 10 oder 11, dadurch gekennzeichnet, daß die fragende Station (1) eine Vielzahl von Abfrageantennen (19a, 19b, 20a, 20b) umfaßt, die untereinander über ein Versorgungsnetz verbunden sind und entsprechend festliegenden Merkmalen bezüglich Amplitude und Phase derart gespeist werden, daß eine Aussendung des Abfragesignals in einer gerichteten Strahlungskeule (21) ermöglicht wird.

13. Identifizierungssystem nach Anspruch 12, dadurch gekennzeichnet, daß das die genannten Antennen (20c, 20d) verbindende Speisenetz Schaltmittel (26, 23, 24) umfaßt.

14. Identifizierungssystem nach einem der Ansprüche 9 bis 13, dadurch gekennzeichnet, daß es mindestens zwei Antwortstationen (2) umfaßt, die jeweils Zeitsteuermittel aufweisen, mittels derer die das modulierte Antwortsignal übertragenden Sender/Empfänger-Mittel (6) sequentiell abgeschaltet werden können und die mit einem Zufallsverzögerungsgenerator verbunden sind, der die jeweilige, durch die Steuermittel bewirkte Abschaltdauer der Sender/Empfänger-Mittel (6) bestimmt.

15. Identifizierungssystem nach einem der Ansprüche 9 bis 14, dadurch gekennzeichnet, daß mindestens eine Antwortstation aus einer im wesentlichen flachen Kennmarke (2b) besteht, daß mindestens eine der Kreispolarisationsantennen (6a, 6b) sich in einer parallel zur großen Fläche der Kennmarke erstreckenden Ebene befindet und daß die Sender/Empfänger-Mittel der Antwortstation eine Ultrahochfrequenz-Empfangs-, Modulations- und Wiederaussendeschaltung und eine mit einer Uhr, einem Speicher und elektronischen Steuer- und Kontrollmitteln für die Ultrahochfrequenzschaltung ausgestattete logische Schaltung umfassen, während die Antwortstation (2) eine Vorzugs-Versorgungsquelle besitzt.

16. Identifizierungssystem nach Anspruch 15, dadurch gekennzeichnet, daß die Kennmarke (2) auf jeder Seite zwei Antennen (36a, 36b, 36a′, 36b′), eine für den Empfang und eine für das Aussenden, umfaßt, wobei die beiden Antennengruppen durch eine Masseebene getrennt sind.

17. Identifizierungssystem nach Anspruch 15 oder 16, dadurch gekennzeichnet, daß die Kennmarke (2) zwei nebeneinanderliegende, symmetrisch auf einer Ebene (45) angeordnete Ringspaltantennen (43, 43′) aufweist.

18. Identifizierungssystem nach Anspruch 17, dadurch gekennzeichnet, daß die Antennen (43, 43′) auf einer Fläche der Kennmarke paarweise gekoppelt sind und auf einer dielektrischen Ebene (45) liegen, wobei jede Antenne mit zwei Mikro-Zuführbändern (46, 46′) verbunden ist, die ihrerseits an einen Modulationstransistor (48) angeschlossen sind, der über einen Widerstand (49) mittels einer durch einen Quartz (53) gesteuerten integrierten Steuerschaltung (50) gespeist wird.

19. Identifizierungssystem nach Anspruch 18, dadurch gekennzeichnet, daß die integrierte Schaltung (50) eine permanente Niederspannungs-Versorgung mit langer Lebensdauer darstellt, wie sie zum Beispiel für elektronische Zählwerke verwendet werden.

## Claims

1. Process for identifying, between an interrogator (1) formed by a transmitter-receiver (5) of radio, preferably ultra-high frequency, waves, and a responder (2) receiving said wave and re-transmitting it as an echo after specific coded modulation towards the interrogator, this echo wave (11) being received and demodulated by the interrogator, whereupon the latter extracts the identification code therefrom, characterized by the steps consisting in: transmitting with the aid of the interrogator (1) by means of an antenna adapted to transmit a rectilinear polarization having a predetermined plane of polarization, an interrogation signal constituted by a radio wave emitted in rectilinear polarization; receiving this wave at the responder with the aid of an antenna adapted to receive a circular polarization in a first direction of rotation; re-transmitting by the responder towards the interrogator a response signal constituted by a radio wave of the same nature as the interrogation wave, but whose polarization is circular and presents a second direction of rotation opposite the first; this wave being bearer of a modulation introduced at the responder; receiving said response signal at the interrogator by means of an antenna adapted to receive a rectilinear polarization whose plane of polarization is perpendicular to the plane of polarization of the transmission antenna of the interrogator.

2. Process of identification according to Claim 1, characterized by a step of differentiation by the responder (2) between the interrogation signal and the response signal, as a function of the directions of rotation, opposite one another, of the polarization of the interrogation wave (6a) received and the re-transmission wave (6b) transmitted by the responder.

3. Process of identification according to one of Claims 1 or 2, characterized in that the step of transmission by the interrogator (1) of the interrogation signal consists in defining a directional radiation lobe (21) privileging certain zones of space close to the interrogator and corresponding to a programmed listening zone.

4. Process of identification according to Claim 3, characterized by phases of supply switching such that each successive interrogation transmission of the interrogator (1) defines a radiation lobe (27, 27′) oriented in space in a direction different with respect to the preceding transmission.

5. Process of identification according to one of Claims 1 to 4, characterized by a step of time control of the responder (2) adapted to interrupt in time the re-transmission signal modulated with respect to the interrogation signal and by a step consisting in delaying at random the modulated re-transmission of the wave with a delay time variable and different for each response of a responder (2), so that the interrogator may effect a discrimination between the respective response signals of at least two responders (2) adjacent with respect to one another.

6. Process of identification according to Claim 5, characterized in that each response signal re-transmitted by the responder (2) is a burst of pulses (29), at several successive times, the bursts being spaced apart sequentially as a function of the random delay mentioned above and therefore by successively different periods.

7. Process of identification according to one of Claims 1 to 6, characterized in that the above-mentioned step of reception and of re-transmission may be effected from one face of the responder (2) or the other.

8. Process of identification according to one of Claims 1 to 7, characterized by a step of adjustment of the interrogation frequency within a determined band corresponding to the reception band of a plurality of responders (2), so as to differentiate the transmission frequencies of a plurality of interrogators (1) in close position, and to separate at the level of each interrogator the response signals of the responders (2) with respect to the interrogation signals of the adjacent interrogators (1).

9. Identification device of the type comprising at least one interrogator (1) and at least one responder (2) which respectively comprise means (3, 6) for transmitting-receiving radio, preferably ultra-high frequency, waves (5, 11), the responder (2) presenting a modulator (10) adapted to effect a specific coded modulation of the wave (5) transmitted by the interrogator (1) and connected to transmitter-receiver means (6) in order to re-transmit the coded wave (11) as an echo towards the interrogator, while the latter presents a demodulator (12, 13, 14) adapted to extract the specific code of the echo wave (11), characterized in that the transmitter-receiver means of the interrogator (1) comprise an antenna (3a) provided with a topography adapted to generate a wave of rectilinear polarization in a predetermined plane and the transmitter-receiver means of the responder (2) comprise a reception antenna (6a) of circular polarization in a first direction of rotation, as well as a re-transmission antenna (6b) adapted to transmit towards the interrogator (1) a response signal of circular polarization, but of which the direction of rotation is opposite the first, the re-transmission antenna (6b) of the responder (2) being connected to the modulator while the interrogator (1) is provided with a reception antenna adapted to receive a rectilinear polarization whose plane is perpendicular to that of the polarization of the wave transmitted by transmission antenna (3a).

10. Identification device according to Claim 9, characterized in that two antennas of the responder (2) respectively for reception of the interrogation wave (6a) and for re-transmission thereof (6b) as an echo after modulation, are adjacent and arranged symmetrically.

11. Identification device according to Claim 9 or 10, characterized in that the transmitter-receiver means of the responder (2) comprise at least one antenna disposed on one face of the responder or the other.

12. Identification device according to one of Claims 9, 10 or 11, characterized in that the interrogator (1) comprises a plurality of interrogation antennas (19a, 19b, 20a, 20b) connected to one another by a supply network and supplied in accordance with determined characteristics of amplitude and of phase, adapted to allow a transmission of the interrogation signal defining a directional radiation lobe (21).

13. Identification device according to Claim 12, characterized in that the supply network connecting said antennas (20c, 20d) comprise switching means (26, 23, 24).

14. Identification device according to one of Claims 9 to 13, characterized in that it comprises at least two responders (2) which each comprise time control means adapted to sequentially disconnect the transmitter-receiver means (6) transmitting the modulated response signal, and connected to a random delay generator which determines the duration of momentary disconnection of the transmitter-receiver means (6) provoked by said control means.

15. Identification device according to one of Claims 9 to 14, characterized in that at least one responder is constituted by a substantially flat badge (2b), that at least one of the antennas of circular polarisation (6a, 6b) is contained in a plane parallel to a large face of the badge and that the transmitter-receiver means of the responder comprise an ultra-high frequency circuit for reception, modulation and re-transmission, a logic circuit which is provided with a clock, a memory and electronic means for controlling and monitoring the ultra-high frequency circuit, while the responder (2) presents a preferential supply source.

16. Identification device according to Claim 15, characterized in that the badge (2) comprises on each face two antennas (36a, 36b, 36a′, 36b,), one for reception and one for re-transmission, the two groups of antennas being separated by a ground plane.

17. Identification device according to Claim 15 or 16, characterized in that the badge (2) comprises two antennas (43, 43′) of the circular slot type and positioned side by side, symmetrically on a plane (45).

18. Identification device according to Claim 17, characterized in that, on one face of the badge, the antennas (43, 43′) are twinned and rest on a dielectric plane (45), each being connected to two supply micro-strips (46, 46′) connected to a modulator transistor (48) which is supplied via a resistor (49) with the aid of an integrated control circuit (50) piloted by quartz (53).

19. Identification device according to Claim 18, characterized in that the integrated circuit (50) constitutes a permanent low-voltage supply and with long life duration, such as those used in electronic timepieces.
